# EUROPEAN PATENT SPECIFICATION

(11) **EP 4 088 559 B1**
(45) Date of publication and mention of the grant of the patent: **28.01.2026**
(21) Application number: 22170198.0
(22) Date of filing: 27.04.2022
(51) Int. Cl.: A01D 41/12, A01D 41/127

(54) **GRAIN LOSS SENSING**
KORNVERLUSTERKENNUNG
DÉTECTION DE PERTE DE GRAIN

(30) Priority: 10.05.2021 GB 202106630
(43) Date of publication of application: 16.11.2022
(73) Proprietor: AGCO International GmbH, 8212 Neuhausen am Rheinfall (CH)
(72) Inventor: HERMANN, Dan, DK-8930 Randers NØ (DK)
(74) Representative: AGCO Intellectual Property Department

(56) References cited:
- EP-A1- 3 714 675
- EP-A2- 3 687 276
- EP-B1- 3 687 276
- DE-A1- 102017 204 101
- US-A1- 2003 190 939
- US-A1- 2014 080 555

## Description

### TECHNICAL FIELD

The present invention relates, in general, to apparatus and methods for monitoring grain loss associated with an agricultural machine.

### BACKGROUND

Self-propelled agricultural machines, specifically combine harvesters, perform multiple harvesting functions within a single machine, including picking, threshing, separating, and cleaning of crop. Such processes often result in the loss of grain, hereinafter referred to as grain loss. Grain loss can occur at one or more points within the harvester, whilst performing any of the above mentioned harvesting tasks, and may occur due to incorrect operation of the machine, operating issues or damage, for example. It is therefore beneficial to be able to monitor this loss, and automate or at least prompt an operator to correct or adjust one or more operational factors to reduce this loss. To achieve this, an accurate measurement of the grain loss is needed.

Known sensors used to measure grain loss include "impact" or acoustic sensors, which are configured to measure the impact of grain and other material incident on a detection surface of the sensor. Grain can be distinguished from other material incident on the sensor through analysis of the signal produced upon impact of material with the detection surface. Specifically, due to the kernels of grain being much harder than the straw and chaff, impacts of the kernels with a detection surface have a characteristic sensor response, namely a fast rise time, with a generally higher amplitude when compared with sensor response associated with the impact of straw and/or chaff with the sensor. Therefore, by measuring the force and/or frequency of such impacts, and in particular those associated with grain incident on the detection surface, it is possible to determine a measurement or at least a prediction of the amount of grain present in the material.

Known systems include the use of acoustic sensors disposed across the rear of a sieve of a combine measuring a sample of material at the rear of the sieve. Other systems may include sampling material passing through and over the end of a straw walker, and using this to calculate the grain loss over the end of the straw walker. In order to obtain an accurate measurement of grain loss using sensors of this type, it is essential that the detection surface of the sensor is positioned correctly and that grain within the material, in particular, is not obscured in any manner. That is, it is important to ensure that the flow of material at the location of the sensor is such that grain therein does come into contact with the detection surface - i.e. it is not deflected away from the surface, or obscured by other material, such as straw or the like. As an example, for systems which position sensors at the end of straw walkers and/or sieves, and rely on gravity for the material to fall onto the sensors when passing over the end of the component, this relies on the grain falling at a set position. However, due to the interaction between grain and other material, e.g. straw, the grain may be deflected away from this position and be missed by the sensor, for example the further material may obscure or prevent the grain material from coming into contact with a detection surface of the sensor.

As a further consideration, it is useful to measure grain loss associated with material remaining following the threshing, separating and cleaning steps - i.e. material which has had grain separated therefrom and will ultimately be deposited from the machine back onto the field, as the amount of grain present in such material provides a good indicator of the efficiency of the machine in harvesting the available grain from the crop material.

US2003/190939A1 provides an example sensor system for monitoring a transverse distribution of straw upstream of a spreader tool.

It would therefore be advantageous to provide improved apparatus and methods for monitoring grain loss.

### SUMMARY OF THE INVENTION

In an aspect of the invention there is provided a spreader tool for an agricultural machine, comprising: an inlet into which material is passed from one or more further components of the agricultural machine; an outlet through which the material may be deposited from the machine; and a sensing unit positioned within the flow path of material deposited through the outlet and configured, in use, to measure an impact parameter indicative of a force and/or frequency of material incident on a detection surface of the sensing unit.

Advantageously, the force and/or frequency of material incident on the detection surface may be indicative of an amount of grain present within the material being deposited from the agricultural machine, and hence may be used as a measurement of grain loss from the agricultural machine.

The sensing unit may preferably be positioned adjacent to and downstream of the outlet of the spreader tool. The sensing unit may be positioned such that the detection surface is positioned within the flow path of material deposited through the outlet such that at least a portion of the deposited material contacts the detection surface as it is deposited from the machine.

The spreader tool may preferably comprise a rotor or fan unit for providing a propulsive force for propelling the material from the spreader tool and out of the agricultural machine. An operational speed of the rotor or fan unit may be controllable such that the speed at which the material is propelled / deposited from the machine is controllable. The spreader tool may be configured such that the detection surface of the sensing unit is positioned in the flow path of material propelled by the rotor or fan unit. The sensing unit may be operable to measure the impact parameter in dependence on the operational speed of the rotor or fan unit.

The spreader tool may optionally comprise one or more deflector plates for controlling the direction at which the material is deposited from the machine. The one or more deflector plates may be controllable, for example, they may be moveable linearly and/or rotationally to control and adjust the direction at which the material is deposited. The sensing unit may be associated with one or more of the deflector plate/s. For example, the sensing unit may be mounted thereon, or be otherwise associated with the deflector plate/s such that material coming into contact with the deflector plate/s may be incident on the detection surface of the sensing unit.

The sensing unit may comprise an acoustic-electric sensing means configured to output an electrical signal which is proportional to the force of material incident on the detection surface of the sensing unit. An acoustic sensor may measure vibrations associated with the contact between the material and the detection surface. The sensing unit may comprise a piezoelectric sensor, operable to output an electrical signal proportional to the impact force of material incident on the detection surface.

In further embodiments, the sensing unit may comprise electrical, optical and/or mechanical sensors, for example, configured to measure an impact parameter associated with the impact of material with a detection surface.

In a further aspect of the invention there is provided a control system for controlling operation of one or more systems of an agricultural machine, the control system comprising one or more controllers configured to: receive an impact signal from a sensing unit of a spreader tool as described in the preceding aspects of the invention, the impact signal comprising a measurement of an impact parameter indicative of a force and/or frequency of material incident on a detection surface of the sensing unit; determine, in dependence on the received impact signal, a measurement of grain loss associated with the agricultural machine; and generate and output one or more control signals for controlling operation of one or more systems of the agricultural machine in dependence on the determined grain loss.

The control system may be operable to control operation of a user interface associated with the machine, e.g. to provide an indication to the operator of the machine of the determined grain loss associated with the measured impact parameter. The indicator may comprise a graphical indicator, such as a visual indicator provided on a display within the machine, or an audible or haptic indication, for example. The indicator may inform the operator of the determined grain loss, and/or one or more actions to be taken to improve / reduce the grain loss.

The control system may be operable to control an operational speed of the machine or one or more components thereof. The operational speed may be a forward speed of the machine. For example, the control system may be operable to reduce a forward speed of the machine in dependence on the determined grain loss. In this way, the control system may provide an operator of the machine with additional time to perform necessary correcting adjustments of, for example, operational parameters of the machine to address or reduce the grain loss. The control system may be operable to bring the machine to a stop so that appropriate actions can be performed to address or reduce the grain loss.

The control system may be operable to control an operational speed of one or more components of the machine. For example, the control system may be operable to control an operational speed of a header or components thereof, e.g. a reel, conveyor(s), belt(s) and the like, or other implement suitably coupled to the machine in dependence on the determined grain loss. The control system may be operable to adjust one or more operational parameters (e.g. speed, timings, etc.) of components associated with threshing, separating and/or cleaning of the material (e.g. rotor speed, fan speed, sieve openings and the like) in order to reduce grain loss.

The control system may be communicable with a spreader tool of the agricultural machine, e.g. with a control unit operable to control operation of the spreader tool. The control system may be operable to receive a spreader operation signal indicative of one or more operational parameters of the spreader tool. The one or more operational parameters may include an operational speed of the spreader tool, e.g. a rotational speed of one or more rotors of the spreader tool, and/or a fan speed of one or more fans of the spreader tool. The one or more operational parameters may be indicative of an expected or predicted speed at which material may be propelled from the spreader tool. The control system may be operable to determine a measurement of grain loss in dependence on spreader operation signal. For example, the expected or predicted speed of material at the detection surface of the sensing unit may be associated with an expected impact force of different material types incident on the surface, which may therefore be used to discriminate between grain and MOG, for example. In alternative embodiments, an operational speed of the spreader tool may be predetermined and be assumed to be substantially constant, and the control system may use the predetermined operational speed to discriminate between material types impacting the detection surface of the sensing unit.

The one or more controllers may collectively comprise an input (e.g. an electronic input) for receiving the impact signal. The one or more controllers may collectively comprise one or more processors (e.g. electronic processors) operable to execute computer readable instructions for controlling operation of the control system, for example to determine the measurement of grain loss. The one or more processors may be operable to generate the one or more control signals. The one or more controllers may collectively comprise an output (e.g. an electronic output) for outputting the one or more control signals.

In an aspect of the invention there is provided a method of controlling operation of one or more systems of an agricultural machine, the method comprising: receiving an impact signal from a sensing unit of a spreader tool of the agricultural machine, the impact signal comprising a measurement of an impact parameter indicative of a force and/or frequency of material incident on a detection surface of the sensing unit; determining, in dependence on the received impact signal, a measurement of grain loss associated with the agricultural machine; and controlling operation of one or more systems of the agricultural machine in dependence on the determined grain loss. The method may comprise controlling operation of a user interface associated with the machine, e.g. to provide an indication to the operator of the machine of the determined grain loss associated with the measured impact parameter. The indicator may comprise a graphical indicator, such as a visual indicator provided on a display within the machine, or an audible or haptic indication, for example. The indicator may inform the operator of the determined grain loss, and/or one or more actions to be taken to improve / reduce the grain loss.

The method may comprise controlling an operational speed of the machine or one or more components thereof. The operational speed may be a forward speed of the machine. For example, the method may comprise reducing a forward speed of the machine in dependence on the determined grain loss. In this way, an operator of the machine may be provided with additional time to perform necessary correcting adjustments of, for example, operational parameters of the machine to address or reduce the grain loss. The method may comprise bringing the machine to a stop so that appropriate actions can be performed to address or reduce the grain loss.

The method may comprise controlling an operational speed of one or more components of the machine. For example, the method may comprise controlling an operational speed of a header or components thereof, e.g. a reel, conveyor(s), belt(s) and the like, or other implement suitably coupled to the machine in dependence on the determined grain loss. The method may comprise adjusting one or more operational parameters (e.g. speed, timings, etc.) of components associated with threshing, separating and/or cleaning of the material (e.g. rotor speed, fan speed, sieve openings and the like) in order to reduce grain loss.

The method may comprise receiving a spreader operation signal indicative of one or more operational parameters of the spreader tool. The one or more operational parameters may include an operational speed of the spreader tool, e.g. a rotational speed of one or more rotors of the spreader tool, and/or a fan speed of one or more fans of the spreader tool. The one or more operational parameters may be indicative of an expected or predicted speed at which material may be propelled from the spreader tool. The method may comprise determining a measurement of grain loss in dependence on spreader operation signal. For example, the expected or predicted speed of material at the detection surface of the sensing unit may be associated with an expected impact force of different material types incident on the surface, which may therefore be used to discriminate between grain and MOG, for example. In alternative embodiments, an operational speed of the spreader tool may be predetermined and be assumed to be substantially constant, and the method may comprise using the predetermined operational speed to discriminate between material types impacting the detection surface of the sensing unit.

In a further aspect of the invention there is provided an agricultural machine comprising the spreader tool and/or control system of any preceding aspect of the invention, and/or configured to perform the method according to the preceding aspect of the invention.

Optionally, the agricultural machine comprises a combine harvester.

### BRIEF DESCRIPTION OF THE DRAWINGS

One or more embodiments of the invention will now be described, by way of example only, with reference to the accompanying drawings, in which:
- Figure 1: is a schematic side cross-sectional view of a combine harvester embodying aspects of the invention;
- Figure 2: is a schematic side cross-sectional view of a chopper and spreader tool embodying aspects of the invention;
- Figure 3: is a schematic view of an embodiment of a control system of the invention;
- Figure 4: is a flowchart illustrating an embodiment of a method of the invention;
- Figure 5: is a graph illustrating observed grain loss associated with different material throughputs;
- Figure 6: is a schematic side cross-sectional view of part of a combine embodying aspects of the invention; and
- Figure 7: is a photograph of a spreader tool of the invention.

### DETAILED DESCRIPTION

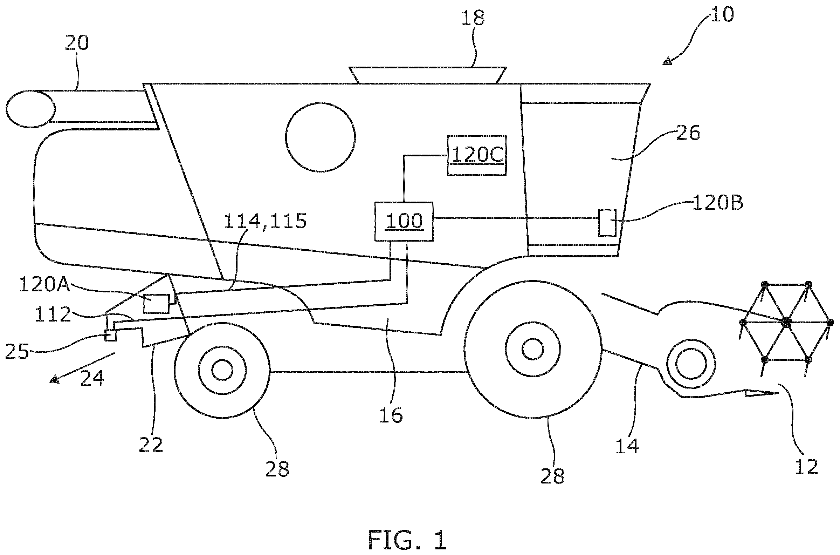

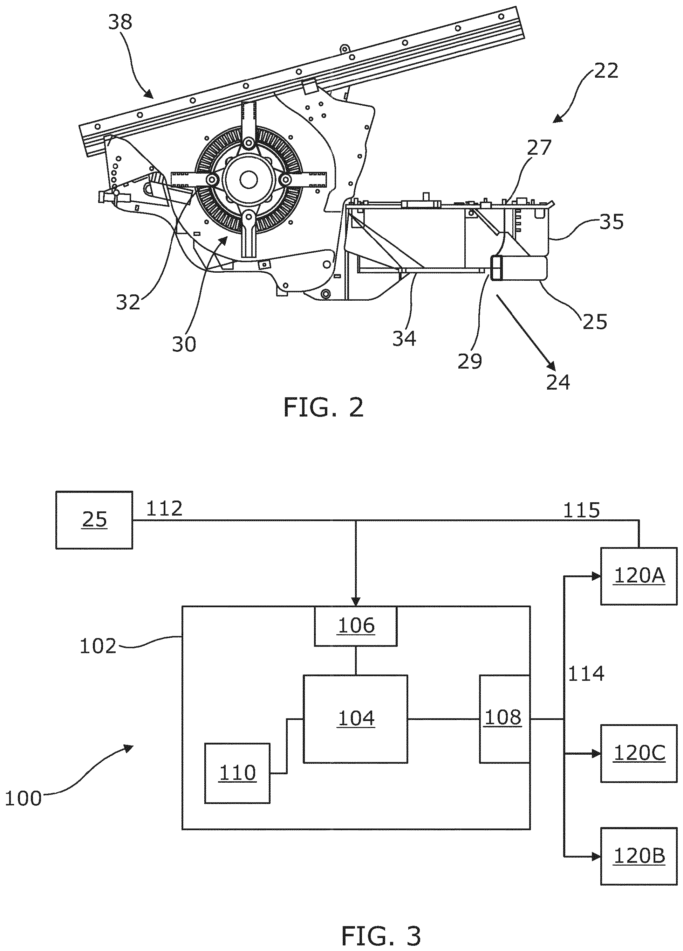

Figures 1 and 2 illustrate an agricultural machine, and specifically a combine 10, embodying aspects of the present invention.

The combine 10 is coupled to a header 12 which is operable, in use, to cut and gather a strip of crop material as the combine 10 is driven across a field or region to be harvested during a harvesting operation. A conveyor section 14 conveys the cut crop material from the header 12 into a crop processing apparatus 16 operable to separate grain and non-grain (i.e. material other than grain (MOG), typically straw and chaff) as will be appreciated. It is noted here that apparatus for separating grain and non-grain material are well-known in the art and the present invention is not limited in this sense. The skilled person will appreciate that numerous different configurations for the crop processing apparatus may be used as appropriate. Clean grain separated from the cut crop material is collected in a grain bin 18, which may be periodically emptied, e.g. into a collection vehicle, storage container, etc. utilising unloading auger 20.

The remaining material, made up largely of non-grain material or MOG, is separately moved to a spreader tool 22 which is operable in use to eject the material from the rear of the combine 10 and onto the ground. In Figure 1, arrow 24 illustrates the direction of the material being ejected rearwards from the combine 10.

The spreader tool 22 includes an inlet (not shown) into which material is passed from one or more further components of the combine 10. In this embodiment, this includes material from a chopper tool 30 (see below). The spreader tool 22 additionally includes an outlet 29 through which the material is deposited from the combine 10 and onto the field / region being harvested by the combine 10. A pair of rotor units 34 are provided as part of the spreader tool 22 for providing a propulsive force for propelling the material from the spreader tool 22 and out of the combine 10. The rotor units 34 each include a plurality of blades (not shown) which interact with the material to propel the material through outlet 29, and the speed of rotation of the rotor units 34 may be controlled (or may be set at a predetermined level) for controlling the propulsive force provided to the material - i.e. the speed at which the material is propelled from the combine 10. Deflector plates (not shown) are also provided for controlling a direction at which the material is deposited from the combine 10.

In the illustrated embodiment of Figures 1 and 2, a chopper tool 30 is also provided and is positioned between the crop processing apparatus 16 and the spreader tool 22 and operable, in use, to cut material before it is spread by the spreader tool 22. The chopper tool 30 includes an inlet 38 into which material may enter an operational enclosure of the chopper tool 30, and a series of blades 32 positioned within the enclosure and each comprising a cutting edge thereon, with the blades being rotatable to provide a cutting action as the material is passed through the chopper tool 30.

It will be appreciated that the efficiency of the separating and cleaning steps performed by the crop processing apparatus 16 may affect the constituents of the material deposited out of the combine 10. In an ideal scenario, all of the grain contained within the crop material collected by the combine 10 will be separated from the MOG, and only MOG will be deposited via the spreader tool 22, however, in most instances there will be grain contained within this material. Accordingly, by obtaining a measurement of an amount of grain contained within the material being deposited from the combine, a measurement of grain loss from the combine, and in particular associated with the separating and cleaning steps of the harvesting process, can be obtained.

Accordingly, the combine 10 of Figures 1 and 2 includes a sensing unit 25 (see Figures 1 and 2, specifically) which comprises a detection surface 27. The sensing unit 25 is positioned within the flow path of material deposited through the outlet 29 of the spreader tool 22 such that material being deposited via the spreader tool 22 may be incident on the detection surface 27. Here, the sensing unit 25 is mounted to the underside of housing 35 of the spreader tool 25.

In use, the sensing unit 25 is configured to measure an impact parameter indicative of a force and/or frequency of material incident on the detection surface 27. Grain can be distinguished from other material incident on the detection surface 27 through analysis of the signal produced upon impact of material therewith (see below discussion). In general, due to the kernels of grain being much harder than the straw and chaff, impacts of the kernels with a detection surface have a characteristic sensor response, namely a fast rise time, with a generally higher amplitude when compared with sensor response associated with the impact of straw and/or chaff with the detection surface 27 of the sensing unit 25. Therefore, by measuring the force and/or frequency of such impacts, and in particular those associated with grain incident on the detection surface 27, it is possible to determine a measurement or at least a prediction of the amount of grain present in the material.

The combine 10 also includes, amongst other features, an operator cab 26, wheels 28, engine (not shown) and a user interface 120B. As will be discussed in detail herein (see Figure 3), the combine 10 embodies a control system 100 operable to control operation of one or more systems of the combine 10 in dependence on the determined grain loss.

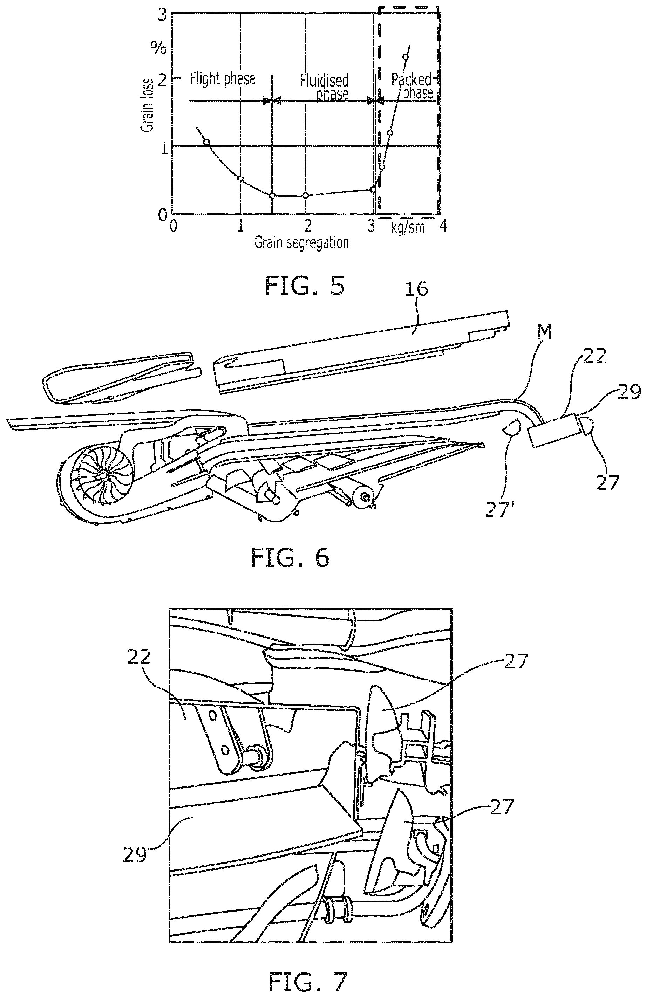

Figures 5 to 7 show a variant of combine 10, and illustrate how the present invention is advantageous in comparison with prior art solutions.

Figures 5 and 6 illustrate how grain loss may vary in dependence on material throughput through the combine 10, and specifically highlights how in a "packed phase" corresponding to a high material throughput grain loss may be at its highest level. As discussed herein, this may correspond to a scenario where the straw and other MOG material is dense enough to effectively form a barrier preventing grain from falling through (and subsequently through the sieves) and being separated therefrom. Rather, in this scenario, the grain material (shown in red in Figure 6) may sit on top of the MOG (shown in yellow in Figure 6) and pass over the end of the separating component and be lost out of the rear of the combine 10.

Current prior art solutions may place a sensor in the position indicated by sensor 27' in Figure 6, attempting to capture a measure of the material being lost over the end of the separating component. However, as illustrated by Figure 6, at high enough material loads, MOG and grain material may not fall onto the sensor 27', but in fact be pushed beyond the position of the sensor 21'. Accordingly, such prior art solutions may be deficient in that an accurate measure of the grain contained within the material being passed over the end of the separating component may not be captured.

To improve on this, the present invention provides a sensor unit 25 with a detection surface 27 in a flow path corresponding to material ejected from an outlet 29 of the spreader tool 22. The combine 10 is configured such that material from the separating component(s) is passed into the spreader tool 22 and subsequently ejected therefrom by applying a propulsive force to the material, in the manner discussed herein. Advantageously, the output from the spreader tool 22, or at least the location at which material is output from the spreader tool can be considered to be roughly constant across varying material loads. Positioning the detection surface 27 of the sensing unit at the outlet 29 of the spreader tool 22 therefore overcomes or at least partly mitigates the problems associated with the prior art discussed herein.

Figure 7 further illustrates the location of the detection surface 27 (here two separate surfaces) with respect to the outlet 29 of the spreader tool 22. As shown, the surfaces 27 are positioned partly within the (expected) flow path of material from the spreader tool 22, but only slightly so as not to significantly impede the flow of material therefrom.

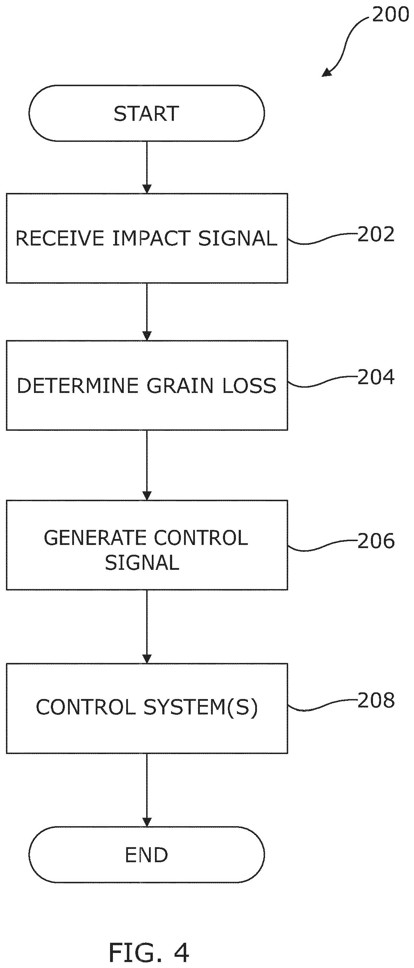

An embodiment of a method 200 of the present invention is illustrated in Figure 4.

At step 202, an impact signal is received from the sensing unit 25 and is utilised to determine a grain loss associated with the harvesting process, and specifically associated with the spreader tool 22 (steps 204 - 208). At step 204, the impact signal is analysed to extract an impact parameter indicative of a force and/or frequency of material incident on the detection surface 27 of the sensing unit 25. As discussed herein, through analysis of the sensor response from sensing unit 25 individual grain impacts on the detection surface 27 of the sensing unit 25 can be identified, and a measure of grain loss determined therefrom. Using the measurement of grain loss, one or more systems of the combine 10 and/or an implement (e.g. header 12) coupled thereto may be controlled based thereon (steps 206 and 208). Specifically, in step 206, a control signal is generated for controlling operation of the one or more systems in a desired manner, and at step 208, this control signal is output to, for example, a control unit (120A, 120B, 120C) associated the relevant system(s) to be controlled for controlling operation of those system(s) in the desired manner.

To reduce the grain lost during a harvesting process, the method 200 and in particular step 208 of the method 200 may include controlling an operational speed of one or more systems of the combine 10. For example, the method 200 may include reducing a forward speed of the combine 10 in dependence on the determined grain loss. To achieve this, the method 200 includes outputting a control signal to an operational control unit 120C associated with the combine 10, e.g. an ECU of the combine 10 responsible for controlling application of a motive force to the wheels 28, either through control of a power unit of the combine 10, and/or control of an associated transmission, for example. Operational control unit 120C may additionally be operable to control operation of the crop processing apparatus 16, for example, to control an operational speed of the apparatus 16 which may dictate a speed of or volume of material which moves through the combine 10.

Additionally or alternatively, method 200 can include outputting a control signal to a control unit 120B associated with a user interface, e.g. a display screen located within the cab 26 for outputting information and/or indicators to an operator of the combine 10 of the determined grain loss, which may include a value and/or one or more suggested corrective actions to be taken to reduce the grain loss.

Additionally or alternatively, method 200 can include outputting a control signal to control unit 120C associated with spreader tool 22, for controlling operation thereof, e.g. to control an operational speed of the rotor units 34, and/or a position of the deflector plates, for example. In a variant, the method 200 may include receiving an operational signal from the control unit 120C indicative of an operational speed of the rotor units 34, for example, and using this information to determine the grain loss. Advantageously, the operational speed of the rotor units 34 may be indicative of the likely speed of material through the outlet 29 of the spreader tool 22, and may be used to identify grain impacts on the detection surface 27 based thereon.

In a further variant, the method 200 may include controlling an operational speed of the header 12 or components thereof, e.g. one or more reels, augers, conveyors, belts and the like, or other implement suitably coupled to the combine 10 in dependence on the determined grain loss. Additionally or alternatively, the method 200 may include controlling a height, position, orientation, etc. of the header 12 or one or more components thereof in dependence on the determined grain loss.

Figure 3 is a schematic illustration of an embodiment of a control system 100 in accordance with the invention, and its functionality within a wider system for agricultural machines (e.g. combine 10). As discussed herein, the control system 100 is operable to control one or more operational parameters of the combine 10 and/or one or more components thereof (e.g. crop processing apparatus 16, header 12, components of header 12, spreader tool 22, etc.) in dependence on a determined grain loss, as determined in the manner described herein using sensing unit 25.

Here, the control system 100 comprises a controller 102 having an electronic processor 104, an electronic input 106, an electronic output 108 and memory 110. The processor 104 is operable to access the memory 110 and execute instructions stored therein to perform given functions, specifically to cause performance of the method 200 of Figure 4 in the manner described hereinabove, and ultimately generate and output a control signal(s) 114 from output 108 for controlling operation of one or more operational parameters of the combine 10 following analysis of data from one or more sensing units (e.g. unit 25). In the illustrated embodiment, the processor 104 is operable to receive an impact signal from the sensing unit 25, where the impact signal comprises a measurement of an impact parameter indicative of a force and/or frequency of material incident on a detection surface 27 of the sensing unit 25. The impact signal here is in the form of input signals 112 received at electronic input 106 of controller 102. The control signals 114 are output via electronic output 108 to respective control units 120A, 120B, 120C associated with one or more operational parameters of the combine 10 or components thereof as described above. For example, in this embodiment, control unit 120C is associated with motion of the combine 10 and may be utilised to control a forward speed of the combine 10, for example. Control unit 120B is associated with the operation of a display unit within the cab 26, and may be utilised to control operation of the display unit to provide information to an operator of the combine with regards to the determined grain loss, e.g. one or more steps for correcting / reducing the grain loss. Control unit 120A is associated with the spreader tool 22, and is operable to control operation of the spreader tool 22, e.g. by controlling an operational speed of the rotor units 34, for example. In the illustrated embodiment, the control unit 120A is operable to output an operational control signal 115 comprising data relating to an operational speed of the spreader tool 22. The operational control signal 115 is received at the electronic input 106 of controller 102 and used to determine the measurement of grain loss. Specifically, and as described herein, with knowledge of an operational speed of the spreader tool 22, and specifically a rotational speed of rotor units 34, the likely speed of material through the outlet 29 of the spreader tool 22 may be predicted, and may be used to identify grain impacts on the detection surface 27 based thereon.

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as set out herein and a machine readable storage storing such a program. Still further, embodiments of the present invention may be conveyed electronically via any medium such as a communication signal carried over a wired or wireless connection and embodiments suitably encompass the same.

## Claims

1. A spreader tool (22) for an agricultural machine (10), comprising:
an inlet into which material is passed from one or more further components of the agricultural machine (10), in use;
an outlet (29) through which the material may be deposited from the machine (10), in use; and **characterised by**
a sensing unit (25) positioned within the flowpath of material deposited through the outlet and configured, in use, to measure an impact parameter indicative of a force and/or frequency of material deposited from the spreader tool (22) and incident on a detection surface (27) of the sensing unit (25), the force and/or frequency being indicative of an amount of grain present within the material being deposited from the agricultural machine (10), providing a measurement of grain loss associated with the agricultural machine (10).

2. A spreader tool (22) of claim 1, wherein the sensing unit (25) is positioned adjacent to and downstream of the outlet (29) of the spreader tool (22).

3. A spreader tool (22) of claim 2, wherein the sensing unit (25) is positioned such that the detection surface (27) is positioned within the flow path of material deposited through the outlet (29) such that at least a portion of the deposited material contacts the detection surface (27) as it is deposited from the machine (10).

4. A spreader tool (22) of any preceding claim, comprising a rotor or fan unit (34) for providing a propulsive force for propelling the material from the spreader tool (22) and out of the agricultural machine (22).

5. A spreader tool (22) as claimed in claim 4, configured such that the detection surface (27) of the sensing unit (25) is positioned in the flow path of material propelled by the rotor or fan unit (34).

6. A spreader tool (22) of claim 4 or claim 5, wherein the sensing unit (25) is operable to measure the impact parameter in dependence on the operational speed of the rotor or fan unit (34).

7. A spreader tool (22) of any preceding claim, wherein the sensing unit (25) comprises an acoustic-electric sensing means configured to output an electrical signal which is proportional to the force of material incident on the detection surface (27) of the sensing unit (25).

8. A control system (100) for controlling operation of one or more systems of an agricultural machine (10), the control system (100) comprising one or more controllers (102) configured to:
receive an impact signal from a sensing unit (25) of a spreader tool (22) as claimed in any of claims 1 to 7, the impact signal comprising a measurement of an impact parameter indicative of a force and/or frequency of material incident on a detection surface (27) of the sensing unit (25);
determine, in dependence on the received impact signal, a measurement of grain loss associated with the agricultural machine (10); and
generate and output one or more control signals for controlling operation of one or more systems of the agricultural machine (10) in dependence on the determined grain loss.

9. A control system (100) as claimed in claim 8, operable to control operation of a user interface (120B) associated with the machine (10) to provide an indication to the operator of the machine (10) of the determined grain loss associated with the measured impact parameter.

10. A control system (100) as claimed in claim 8 or claim 9, operable to control an operational speed of the machine (10) or one or more components thereof; optionally wherein the operational speed comprises a forward speed of the machine (10).

11. A control system (100) of any of claims 8 to 10, operable to adjust one or more operational parameters of components associated with threshing, separating and/or cleaning of the material in order to reduce grain loss.

12. A control system (100) of any of claims 8 to 11, operable to receive a spreader operation signal indicative of one or more operational parameters of the spreader tool (22); and determine a measurement of grain loss in dependence on spreader operation signal.

13. A control system (100) of claim 12, wherein the spreader operation signal is indicative of an operational speed of the spreader tool (22).

14. A method (200) of controlling operation of one or more systems of an agricultural machine, the method comprising:
receiving (202) an impact signal from a sensing unit of a spreader tool of the agricultural machine, the impact signal comprising a measurement of an impact parameter indicative of a force and/or frequency of material incident on a detection surface of the sensing unit;
determining (204), in dependence on the received impact signal, a measurement of grain loss associated with the agricultural machine; and
controlling (206, 208) operation of one or more systems of the agricultural machine in dependence on the determined grain loss.

15. An agricultural machine (10), comprising:
the spreader tool (22) of any of claims 1 to 7; and
the control system (100) of any of claims 8 to 13.

## Patentansprüche

1. Streuwerkzeug (22) für eine landwirtschaftliche Maschine (10), das Folgendes umfasst:
einen Einlass, in den im Betrieb Material von einem oder mehreren weiteren Komponenten der landwirtschaftlichen Maschine (10) geleitet wird;
einen Auslass (29), durch den im Betrieb das Material von der Maschine (10) abgeschieden werden kann; und **gekennzeichnet durch**
eine Erfassungseinheit (25), die innerhalb des Strömungswegs von durch den Auslass abgeschiedenem Material positioniert ist und dazu ausgelegt ist, im Betrieb einen Aufprallparameter zu messen, der indikativ für eine Kraft und/oder Frequenz von Material ist, das von dem Streuwerkzeug (22) abgeschieden wird und auf eine Detektionsoberfläche (27) der Erfassungseinheit (25) auftrifft, wobei die Kraft und/oder Frequenz indikativ für eine Kornmenge ist, die innerhalb des von der landwirtschaftlichen Maschine (10) abgeschiedenen Materials vorhanden ist, eine Messung des mit der landwirtschaftlichen Maschine (10) verbundenen Kornverlusts bereitstellend.

2. Streuwerkzeug (22) nach Anspruch 1, wobei die Erfassungseinheit (25) angrenzend an den Auslass (29) des Streuwerkzeugs (22) und diesem nachgelagert positioniert ist.

3. Streuwerkzeug (22) nach Anspruch 2, wobei die Erfassungseinheit (25) so positioniert ist, dass die Detektionsoberfläche (27) innerhalb des Strömungswegs von durch den Auslass (29) abgeschiedenem Material positioniert ist, sodass mindestens ein Teil des abgeschiedenen Materials in Kontakt mit der Detektionsoberfläche (27) kommt, während es von der Maschine (10) abgeschieden wird.

4. Streuwerkzeug (22) nach einem der vorhergehenden Ansprüche, umfassend eine Rotor- oder Gebläseeinheit (34) zum Bereitstellen einer Antriebskraft zum Treiben des Materials aus dem Streuwerkzeug (22) und aus der landwirtschaftlichen Maschine (22) heraus.

5. Streuwerkzeug (22) nach Anspruch 4, so ausgelegt, dass die Detektionsoberfläche (27) der Erfassungseinheit (25) in dem Strömungsweg von Material positioniert ist, das von der Rotor- oder Gebläseeinheit (34) angetrieben wird.

6. Streuwerkzeug (22) nach Anspruch 4 oder Anspruch 5, wobei die Erfassungseinheit (25) betreibbar ist, um den Aufprallparameter in Abhängigkeit von der Betriebsdrehzahl der Rotor- oder Lüftereinheit (34) zu messen.

7. Streuwerkzeug (22) nach einem der vorhergehenden Ansprüche, wobei die Erfassungseinheit (25) ein akustisch-elektrisches Erfassungsmittel umfasst, das dazu ausgelegt ist, ein elektrisches Signal auszugeben, das proportional zu der Kraft des Materials ist, das auf der Detektionsoberfläche (27) der Erfassungseinheit (25) auftrifft.

8. Steuersystem (100) zum Steuern des Betriebs eines oder mehrerer Systeme einer landwirtschaftlichen Maschine (10), wobei das Steuersystem (100) eine oder mehrere Steuerungen (102) umfasst, die ausgelegt sind zum:
Empfangen eines Aufprallsignals von einer Erfassungseinheit (25) eines Streuwerkzeugs (22) nach einem der Ansprüche 1 bis 7, wobei das Aufprallsignal eine Messung eines Aufprallparameters umfasst, der indikativ für eine Kraft und/oder Frequenz von Material ist, das auf einer Detektionsoberfläche (27) der Erfassungseinheit (25) auftrifft;
Bestimmen, in Abhängigkeit von dem empfangenen Aufprallsignal, einer Messung des mit der landwirtschaftlichen Maschine (10) verbundenen Kornverlusts; und
Erzeugen und Ausgeben eines oder mehrerer Steuersignale zum Steuern des Betriebs eines oder mehrerer Systeme der landwirtschaftlichen Maschine (10) in Abhängigkeit von dem bestimmten Kornverlust.

9. Steuersystem (100) nach Anspruch 8, das betreibbar ist, um den Betrieb einer Benutzerschnittstelle (120B), die mit der Maschine (10) assoziiert ist, zu steuern, um dem Bediener der Maschine (10) eine Anzeige des bestimmten Kornverlusts, der mit dem gemessenen Aufprallparameter verbunden ist, bereitzustellen.

10. Steuersystem (100) nach Anspruch 8 oder Anspruch 9, das betreibbar ist, um eine Betriebsgeschwindigkeit bzw. -drehzahl der Maschine (10) oder einer oder mehrerer Komponenten davon zu steuern; wobei optional die Betriebsgeschwindigkeit eine Vorwärtsgeschwindigkeit der Maschine (10) umfasst.

11. Steuersystem (100) nach einem der Ansprüche 8 bis 10, das betreibbar ist zum Anpassen eines oder mehrerer Betriebsparameter von Komponenten, die mit dem Dreschen, Trennen und/oder Reinigen des Materials assoziiert sind, um Kornverlust zu reduzieren.

12. Steuersystem (100) nach einem der Ansprüche 8 bis 11, das betreibbar ist zum Empfangen eines Streuerbetriebssignals, das indikativ für einen oder mehrere Betriebsparameter des Streuwerkzeugs (22) ist; und Bestimmen einer Messung des Kornverlusts in Abhängigkeit von dem Streuerbetriebssignal.

13. Steuersystem (100) nach Anspruch 12, wobei das Streuerbetriebssignal indikativ für eine Betriebsdrehzahl des Streuwerkzeugs (22) ist.

14. Verfahren (200) zum Steuern des Betriebs eines oder mehrerer Systeme einer landwirtschaftlichen Maschine, wobei das Verfahren Folgendes umfasst:
Empfangen (202) eines Aufprallsignals von einer Erfassungseinheit eines Streuwerkzeugs der landwirtschaftlichen Maschine, wobei das Aufprallsignal eine Messung eines Aufprallparameters umfasst, der indikativ für eine Kraft und/oder Frequenz von Material ist, das auf einer Detektionsoberfläche der Erfassungseinheit auftrifft;
Bestimmen (204), in Abhängigkeit von dem empfangenen Aufprallsignal, einer Messung des mit der landwirtschaftlichen Maschine verbundenen Kornverlusts; und
Steuern (206, 208) des Betriebs eines oder mehrerer Systeme der landwirtschaftlichen Maschine in Abhängigkeit von dem bestimmten Kornverlust.

15. Landwirtschaftliche Maschine (10), die Folgendes umfasst:
Streuwerkzeug (22) nach einem der Ansprüche 1 bis 7; und
Steuersystem (100) nach einem der Ansprüche 8 bis 13.

## Revendications

1. Outil d'étalement (22) pour une machine agricole (10), comprenant :
une entrée dans laquelle de la matière passe depuis un ou plusieurs autres composants de la machine agricole (10), en cours d'utilisation ;
une sortie (29) à travers laquelle la matière peut être déposée depuis la machine (10), en cours d'utilisation ;
et **caractérisé par**
une unité de détection (25) positionnée dans le trajet d'écoulement de matière déposée à travers la sortie et configurée, en cours d'utilisation, pour mesurer un paramètre d'impact indicatif d'une force et/ou d'une fréquence de matière déposée depuis l'outil d'étalement (22) et incidente sur une surface de détection (27) de l'unité de détection (25), la force et/ou la fréquence étant indicatives d'une quantité de grain présente dans la matière déposée depuis la machine agricole (10), fournissant une mesure de perte de grain associée à la machine agricole (10).

2. Outil d'étalement (22) selon la revendication 1, dans lequel l'unité de détection (25) est positionnée de manière adjacente à et en aval de la sortie (29) de l'outil d'étalement (22).

3. Outil d'étalement (22) selon la revendication 2, dans lequel l'unité de détection (25) est positionnée de telle sorte que la surface de détection (27) est positionnée à l'intérieur du trajet d'écoulement de matière déposée à travers la sortie (29) de telle sorte qu'au moins une partie de la matière déposée est en contact avec la surface de détection (27) lorsqu'elle est déposée depuis la machine (10).

4. outil d'étalement (22) selon l'une quelconque des revendications précédentes, comprenant une unité de rotor ou de ventilateur (34) pour fournir une force de propulsion pour propulser la matière à partir de l'outil d'étalement (22) et hors de la machine agricole (22).

5. Outil d'étalement (22) selon la revendication 4, configuré de telle sorte que la surface de détection (27) de l'unité de détection (25) est positionnée dans le trajet d'écoulement de matière propulsée par l'unité de rotor ou de ventilateur (34).

6. Outil d'étalement (22) selon la revendication 4 ou la revendication 5, dans lequel l'unité de détection (25) est utilisable pour mesurer le paramètre d'impact en fonction de la vitesse opérationnelle de l'unité de rotor ou de ventilateur (34).

7. Outil d'étalement (22) selon l'une quelconque des revendications précédentes, dans lequel l'unité de détection (25) comprend un moyen de détection acoustique-électrique configuré pour émettre un signal électrique qui est proportionnel à la force de matière incidente sur la surface de détection (27) de l'unité de détection (25).

8. Système de commande (100) pour commander le fonctionnement d'un ou plusieurs systèmes d'une machine agricole (10), le système de commande (100) comprenant un ou plusieurs dispositifs de commande (102) configurés pour :
recevoir un signal d'impact en provenance d'une unité de détection (25) d'un outil d'étalement (22) selon l'une quelconque des revendications 1 à 7, le signal d'impact comprenant une mesure d'un paramètre d'impact indicatif d'une force et/ou d'une fréquence de matière incidente sur une surface de détection (27) de l'unité de détection (25) ;
déterminer, en fonction du signal d'impact reçu, une mesure de perte de grain associée à la machine agricole (10) ; et
générer et émettre un ou plusieurs signaux de commande pour commander le fonctionnement d'un ou plusieurs systèmes de la machine agricole (10) en fonction de la perte de grain déterminée.

9. Système de commande (100) selon la revendication 8, utilisable pour commander le fonctionnement d'une interface utilisateur (120B) associée à la machine (10) pour fournir une indication à l'opérateur de la machine (10) de la perte de grain déterminée associée au paramètre d'impact mesuré.

10. Système de commande (100) selon la revendication 8 ou la revendication 9, utilisable pour commander une vitesse opérationnelle de la machine (10) ou un ou plusieurs composants de celle-ci ; facultativement, dans lequel la vitesse opérationnelle comprend une vitesse d'avancement de la machine (10).

11. Système de commande (100) selon l'une quelconque des revendications 8 à 10, utilisable pour ajuster un ou plusieurs paramètres opérationnels de composants associés au battage, à la séparation et/ou au nettoyage de la matière afin de réduire la perte de grain.

12. Système de commande (100) selon l'une quelconque des revendications 8 à 11, utilisable pour recevoir un signal de fonctionnement de l'outil d'étalage indicatif d'un ou plusieurs paramètres de fonctionnement de l'outil d'étalement (22) ; et déterminer une mesure de perte de grain en fonction du signal de fonctionnement de l'outil d'étalement.

13. Système de commande (100) selon la revendication 12, dans lequel le signal de fonctionnement de l'outil d'étalement est indicatif d'une vitesse opérationnelle de l'outil d'étalement (22).

14. Procédé (200) de commande du fonctionnement d'un ou plusieurs systèmes d'une machine agricole, le procédé comprenant :
la réception (202) d'un signal d'impact en provenance d'une unité de détection d'un outil d'étalement de la machine agricole, le signal d'impact comprenant une mesure d'un paramètre d'impact indicatif d'une force et/ou d'une fréquence de matière incidente sur une surface de détection de l'unité de détection ;
la détermination (204), en fonction du signal d'impact reçu, d'une mesure de perte de grain associée à la machine agricole ; et
la commande (206, 208) du fonctionnement d'un ou plusieurs systèmes de la machine agricole en fonction de la perte de grain déterminée.

15. Machine agricole (10) comprenant :
un outil d'étalement (22) selon l'une quelconque des revendications 1 à 7 ; et
le système de commande (100) selon l'une quelconque des revendications 8 à 13.
